(19) Europäisches Patentamt

European Patent Office

Office européen des brevets

(11) **EP 1 619 623 A1**

(12) **EUROPEAN PATENT APPLICATION**

(43) Date of publication:
**25.01.2006 Bulletin 2006/04**

(51) Int Cl.:
*G06T 7/00* (2006.01)

(21) Application number: **04077125.5**

(22) Date of filing: **22.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **ICOS VISION SYSTEMS N.V.**
**3001 Heverlee (BE)**

(72) Inventors:
• **Van Der Burgt, Maarten, Icos Vision Systems N.V.**
**3001 Heverlee (BE)**

• **Nijs, Frans, Icos Vision Systems N.V.**
**3001 Heverlee (BE)**
• **Vanderheydt, Luc, Icos Vision Systems N.V.**
**3001 Heverlee (BE)**
• **Smets, Carl, Icos Vision Systems N.V.**
**3001 Heverlee (BE)**

(74) Representative: **Quintelier, Claude et al**
**Gevers & Vander Haeghen**
**Holidaystraat 5**
**1831 Diegem (BE)**

(54) **Apparatus for three dimensional measuring on an electronic component**

(57) A three dimensional measuring apparatus, provided for measuring a position of at least one contact element, applied on a surface of an electronic component, said apparatus comprising a first and a second camera, said first and second camera being each provided with a lens set-up, having an optical axis, said first and second camera being disposed at opposite sides with respect to a perpendicular axis on said surface of said component, in such a manner that their optical axis form each time an angle ≠ 0° with respect to said perpendicular axis, said first and second camera each having an image field, provided for forming thereon a first, respectively a second image pattern of at least one of said contact elements, said first and second camera being connected with an image processor, provided for processing said image patterns formed in said image field by applying a perspective reconstruction on measurements, performed on said first and second image pattern, in order to determine, within a 3D reference frame, said position of said at least one contact element.

*Fig. 1*

EP 1 619 623 A1

**Description**

The invention relates to a three dimensional measuring apparatus, provided for measuring a position of at least one contact element, applied on a surface of an electronic component, said apparatus comprising an illumination source, provided for illuminating said contact element, said apparatus further comprising a first and a second camera, said first and second camera being each provided with a lens set-up having a focal point and optical axis, said first and second camera being disposed at opposite sides with respect to a perpendicular axis on said surface of said component, in such a manner that their optical axis form each time an angle ≠ 0° with respect to said perpendicular axis, said first and second camera each having an image field, provided for forming thereon a first, respectively a second image pattern of at least one of said contact elements, said first and second camera being connected with an image processor, provided for processing said image patterns formed in said image field by applying calculations on said first and second image patterns in order to determine, within a 3D reference frame, said position of said at least one contact element.

Such an apparatus is known from US-A-6,064,756. The known apparatus comprises besides the first and second camera also a third camera, which is mounted perpendicular with respect to the surface of the component. This third camera is necessary since the position of one or more of the contact elements is determined by using triangulation calculations applied on the image recorded by the third camera and also on the image recorded by the first or second camera. The use of this triangulation is required to obtain the co-ordinates of the position in three dimensions.

Such an apparatus is also known from EP-A-1 185 841. The latter document describes the use of one perpendicularly mounted and one inclined camera for measuring the positions of contact elements of an electronic component.

A drawback of the known apparatus is that the angle at which the first and second camera are placed with respect to the third camera has to be known accurately. Indeed, the triangulation calculation, applied to determine the three dimensional position, requires an accurate knowledge of this angle, since the latter forms a basic parameter for this triangulation calculation.

It is an object of the present invention to realise a three dimensional measuring apparatus using another calculation than the triangulation for measuring a three dimensional position of at least one contact element, without affecting the measurement accuracy.

For this purpose, a three dimensional measuring apparatus according to the present invention is characterised in that said image processor is provided for applying a perspective reconstruction on measurements performed on said first and second image pattern, in order to apply said calculation with reference to a predetermined calibre. The perspective reconstruction used for determining the three dimensional position of contact elements on a surface of an electronic component is based on a calculation of the intersection point of two lines crossing each time the focal point of the lens set-up of each of the two cameras. The angles at which the cameras are placed with respect to the surface of the electronic component are not used in the perspective reconstruction. In this perspective reconstruction the angles of the cameras are only implicitly present.

A first preferred embodiment of an apparatus according to the present invention is characterised in that said image processor comprises a memory, provided for storing camera-model parameters for each camera, obtained by placing said calibre, having a set of two dimensional (x,y) points, in said reference frame and forming for each point $(x_i, y_j)$ of said set an image point $(i,j)$ thereof within each respective image field by tracing an optical line connecting said focal point and said point $(x_i, y_j)$, and by determining within each respective image field image co-ordinates $(i,j)$ of said image points, said camera-model parameters being formed by a set of equations converting each point $(x_i, y_j)$ of said set in said image co-ordinates $(i,j)$, said image processor being further provided for realising said perspective reconstruction by attributing a predetermined location C1(i,j), respectively C2(i,j) within said respective image patterns and for determining, using said camera-model parameters, a first point P1(x,y,z=0) and a second point P2(x,y,z=0) within said reference frame, said image processor being further provided for determining a first and a second line segment, connecting said first point P1(x,y,z=0) and second point P2(x,y,z=0) respectively, with the focal point of the lens set-up of said first, respectively said second camera and for determining co-ordinates (x,y,z) of a point (P) on said contact element situated at a cross-point of said first and second line segment. The camera-model parameters enable to establish a mathematical relationship between a two-dimensional position on the surface of the calibre and image points in the first and second image. The attribution of a predetermined location within an image pattern and the use of the camera-model parameters lead to the determination of two-dimensional co-ordinates of the calibre within the reference frame. The third dimension of the contact element is obtained by the determination of the cross-point of the first and second line segment.

A second preferred embodiment of an apparatus according to the present invention is characterised in that said first and second camera are disposed symmetrically with respect to said perpendicular axis. The symmetrical disposition of the cameras results in more straightforward software algorithms and structures.

Preferably, the optical axis of said first and second camera form among them an angle situated between 20° and 120°. An angle of 20° already provides a sufficient accuracy for determining the position of the contact element, whereas an angle of 120° forms an upper limit because otherwise the overall dimension of the apparatus would become too large. If the angles are too large, the image recorded by the camera is compressed in one direction resulting in a loss of resolution and accuracy.

Preferably, said predetermined location C1(i,j), respectively C2(i,j) is located at substantially a centre of said pattern. Since the centre of the pattern can be easily and reliably determined, an accurate and reliable determination of the co-ordinates is possible.

A third preferred embodiment of an apparatus according to the present invention is characterised in that said set of equations is formed by :

$$x = \frac{ai+bj+p}{1+ei+fj}$$

$$y = \frac{ci+dj+q}{1+ei+fj}$$

wherein the parameters a, b, c and d are related to a scaling and a rotation of said camera with respect to said reference frame, the parameters p and q giving an offset of an origin of said camera with respect to said reference frame and the parameters e and f being related to a camera tilt angle with respect to said reference plane. These equations are obtained by using a calibre having a grid of crosses at precisely known positions.

Preferably, said apparatus comprises selection means for selectively activating one of said illuminators. In such a manner an appropriate illumination can be selected in function of the type of contact elements to be measured.

A fourth preferred embodiment of an apparatus according to the present invention is characterised in that said apparatus comprises a third camera having an optical axis applied coincident with said perpendicular axis, said third camera being provided for recording an image of said surface for inspection purpose. The third camera can be used for surface inspection of the component or for determining a peripheral of the surface of the component.

Preferably said lens set-up comprises a further set of lenses mounted on a rotary lens mount, each lens of said further set having a predetermined focal point. The rotary lens mount enables to adapt the lens and thus the associated focal point to the type of electronic components to be measured.

A fifth preferred embodiment of an apparatus according to the present invention is characterised in that said illumination source is formed by a line projector provided for projecting an array of lines on said surface in order to form a further array of lines within said image fields, said image processor being provided for applying between a predetermined number of successive image patterns a first set of first windows within said first image, said image processor being also provided for determining within each of said first windows a first window crossing point indicating a crossing of said first window by one of said lines of said further array and for determining within said first window co-ordinates of said first window crossing point, said image processor being further provided for mapping said co-ordinates corresponding to said first window crossing point into said second image in order to obtain a mapped first window crossing point and determining within said second image a second set of windows around said mapped first window crossing point, said image processor being also provided for determining within said second window a further crossing point indicating a crossing of said second window by one of said lines of said further array and for determining co-ordinates within said surface on the basis of said first and second window crossing points. The use of such a line projection enables to determine in an accurate manner the position and deformation or warpage of the substrate.

The invention will now be described in more details with reference to the drawings illustrating preferred embodiments of an apparatus and a method according to the present invention. In the drawings :

figure 1 illustrates a first embodiment of an apparatus according to the invention;
figure 2 illustrates a second embodiment of an apparatus according to the invention;
figure 3 illustrates a third embodiment of an apparatus according to the invention;
figure 4 illustrates the relation between the maximum height of an obstacle on the electronic component and the camera angle for a Land Grid Array (LGA) component;
figure 5 a) to 5 d) show for different electronic components their associated image pattern;
figures 6 to 9 illustrate image patterns for a BGA (Ball Grid Array), a LGA (Land Grid Array), a GW (Gull Wing) or QFN (Quad Flat Non-leaded) and a LGA socket respectively;
figure 10 illustrates an image pattern obtained by using a line projection illumination;
figure 11 shows a rotary lens mount as lens set-up for a camera;
figure 12 a) and 12 b) show a calibre;
figures 13 and 13 a) to c) illustrate the optical relationship between the image and the object formed by an electronic component;
figure 14 illustrates the optical path of light rays between object and camera sensors;
figure 15 illustrates the determination of the co-ordinates using the perspective reconstruction;
figures 16 and 17 illustrate the use of the perspective reconstruction using line projection; and
figure 18 illustrates how obstacles on the component can be taken into account.

In the drawings a same reference sign has been allotted to a same or analogous element.

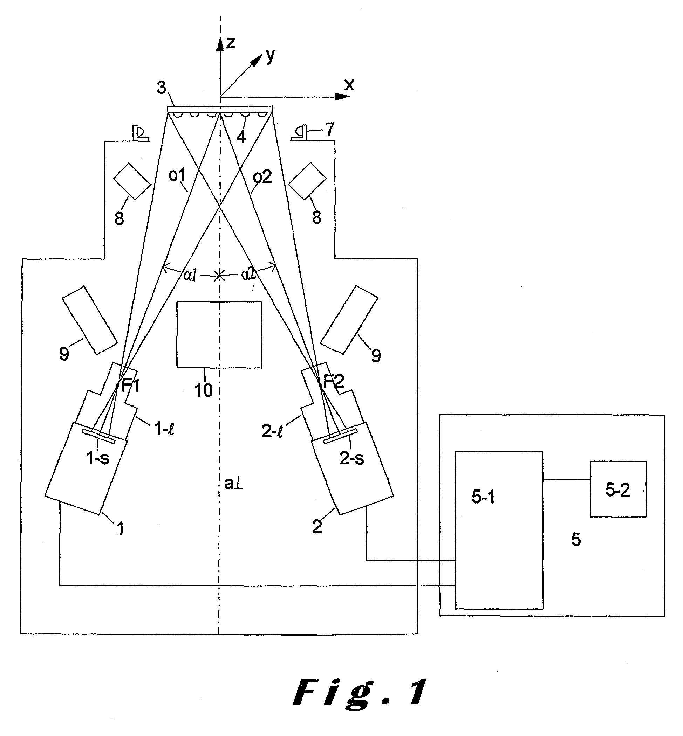

The apparatus for measuring three-dimensional co-ordinates of at least one contact element applied on a surface of an electronic component and illustrated in figure 1 comprises a first 1 and a second 2 camera. Each camera comprises a lens set-up (1-I; 2-I) and a sensor (1-s; 2-s). The lens set-up each time has a focal point (F1, F2) and an optical axis o1 and o2. The cameras are oriented in such a manner as to record an image of an object 3 formed by an electronic component, having contact elements 4. The contact elements can be, contact pins as well as contact sockets. The electronic components can be of different types such as for example:

BGA     Ball Grid Array
CSP     Chip Scale Package
LGA     Land Grid Array
PGA     Pin Grid Array
QFN     Quad Flat Non-leaded
GW     Gull Wing

LGA sockets
J-leaded

The cameras are mounted in such a manner as to form an angle $\alpha1$ respectively $\alpha2$ with respect to a perpendicular axis $a\perp$ on the surface of the component. The cameras are disposed at opposite sides with respect to the perpendicular axis $a\perp$ and the angles $\alpha1$ and $\alpha2$ are measured with respect to the axis $a\perp$ and the optical axis (o1 and o2) of the lens set-up of the cameras.

The apparatus has a reference frame x, y, z as indicated on top of figure 1. Preferably the optical axis o1 and o2 extend in the x, z plane and the object 3 preferably extends as from the origin of the reference frame in order to render calculations more easy as will be described hereinafter.

The angles $\alpha1$ and $\alpha2$ at which the cameras are disposed should preferably be chosen in such a manner that $\alpha1 + \alpha2$ are at least 20° in order to provide sufficient measurement accuracy. In the most preferred embodiment $\alpha1 = \alpha2 = 20°$. An equal value for $\alpha1$ and $\alpha2$ renders calculations more easy as symmetrical images are obtained. However, $\alpha1$ and $\alpha2$ may have different values. The sum $\alpha1 + \alpha2$ may however not be too large, as this would compress the image in the camera in one direction, resulting in a loss of resolution and accuracy. A too high value for $\alpha1 + \alpha2$ would also lead to large outer dimensions of the whole apparatus housing. A value of $\alpha1 + \alpha2 = 120°$ is therefore considered as being an upper limit.

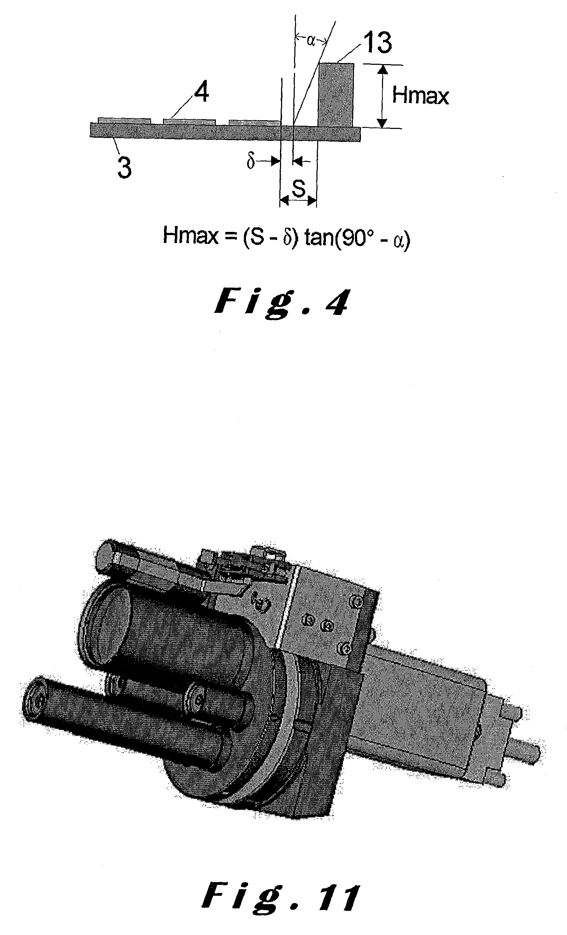

In case that the electronic component to be measured has resistors, capacitors or other parts placed close to the electrical contacts, the camera angle should be such that there is always a clear view of the electrical contact, which position has to be determined. This again requires small angles for $\alpha1$ and $\alpha2$. Figure 4 illustrates an electrical component 3 on which a large part 13 or an obstacle is provided. The camera should be oriented in such a manner that part 13 does not form an obstacle for recording an image of all the electrical contacts 4. In the example illustrated in figure 4, the relation is shown between the maximum height (Hmax) of the part 13 and the angle of the camera for an LGA component. The maximum height is given by

$$\tan(90° - \alpha) = \frac{H\max}{(S - \delta)}$$

or

$$Hmax = (S - \delta)\tan(90° - \alpha).$$

Where S is the distance between the pad and the obstacle and $\delta$ a tolerance margin.

The image sensor of each camera (1, 2) is connected to an image processor 5 provided for applying a perspective reconstruction on the image pattern as recorded by the cameras. The image processor is formed by a microprocessor (5-1) connected to a memory (5-2). The memory is provided for storing camera-model parameters for each camera as will be described hereinafter.

In order to record an image of the contact elements 4 on the surface of the electronic component 3, the latter has to be illuminated. For this purpose the apparatus is provided with one or more illumination sources. The latter is for example formed by a LED ring illumination 7 placed near the component and providing a ring shaped illumination. This LED ring illumination is particularly suitable for measuring the balls of a BGA or CSP and for the pins of a PGA. A LED bar illuminator 8 could also be provided as illumination source. The LED bar is mounted under on oblique angle with respect to the component 3 and situated near the component but under the LED ring. The LED bars are used for illuminating a calibre during the calibration procedure of the apparatus and for illuminating the contact pads of the LGA component. Preferably the apparatus comprises two LED bars applied sidewise with respect to the component.

A further embodiment for the illumination source is formed by a diffuse illuminator 9 placed near the lens set-up of the cameras. Preferably two diffuse illuminators are used. The diffuse illuminators are used for measuring the quality of the substrate on which the contact elements are applied or for a three dimensional inspection of GW or QFN components or LGA sockets. Finally a coaxial illuminator 10 could form an illumination source. The coaxial illuminator is mounted coaxially with axis a⊥ and is used for illuminating the contact pads of the LGA components. The coaxial illuminator is further used for measuring the substrate quality and the outline of the component.

The apparatus according to the invention can be either provided with all the illumination sources described here before or only with a selection thereof, depending on the type of electronic components to be measured. In the case that the apparatus comprises more than one illumination source, the apparatus is preferably provided with selection means for selectively activating one of said illuminators. The selection means are for example formed by a set of push-buttons in order to manually select a source or by an automatic selector having an input, provided for inputting an identifier, identifying a type of contact element to be inspected. In the latter case, the illumination source is selected in function of the input identifier, which is supplied to a memory in which for each identifier there is stored an appropriate illumination source.

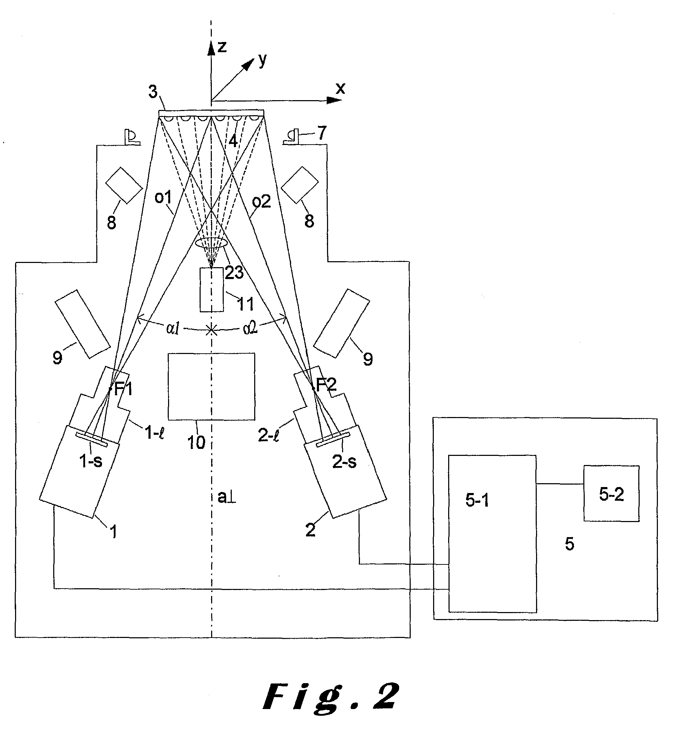

The embodiment of the apparatus illustrated in figure 2 distinguishes over the one of figure 1 by the presence of a line projector 11. The line projector is used for measuring the 3D position and shape of the component substrate. The line projector projects an array of bright lines on the substrate and is for example formed by a line projector of the type Lasiris Mini 599L-0.149°-685T-50-15°-SD or by a slide projector with a LED or halogen illumination source having a condensor lens, a slide with bright and dark lines and an objective lens. The array of bright lines needs to cover the substrate area, which for the current components signifies an area of 10 x 10 mm to 65 x 65 mm. The distance between the lines needs to be large enough since the calculation algorithms should be able to associate a line in the image recorded by the first camera 1 with a same line in the image recorded by the second camera 2. In practice this signifies that the distance between bright lines on the substrate should be between 0.2 and 2.5 mm depending on the component dimensions and the used field of view.

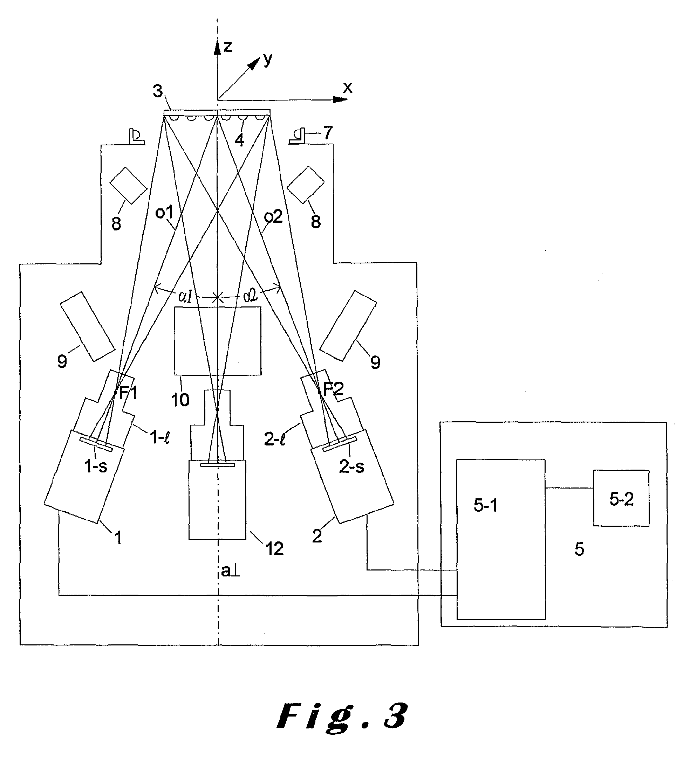

The embodiment of the apparatus illustrated in figure 3 distinguishes over the one of figure 1 or 2 in that a third camera 12 is present. The third camera has an optical axis applied coincident with the perpendicular axis a⊥ and being provided for recording an image of the substrate surface for inspection purpose or for determining a peripheral of this surface. It should be noted that the image recorded by this third camera does not contribute to the determination of the position of the contact element of the electronic component.

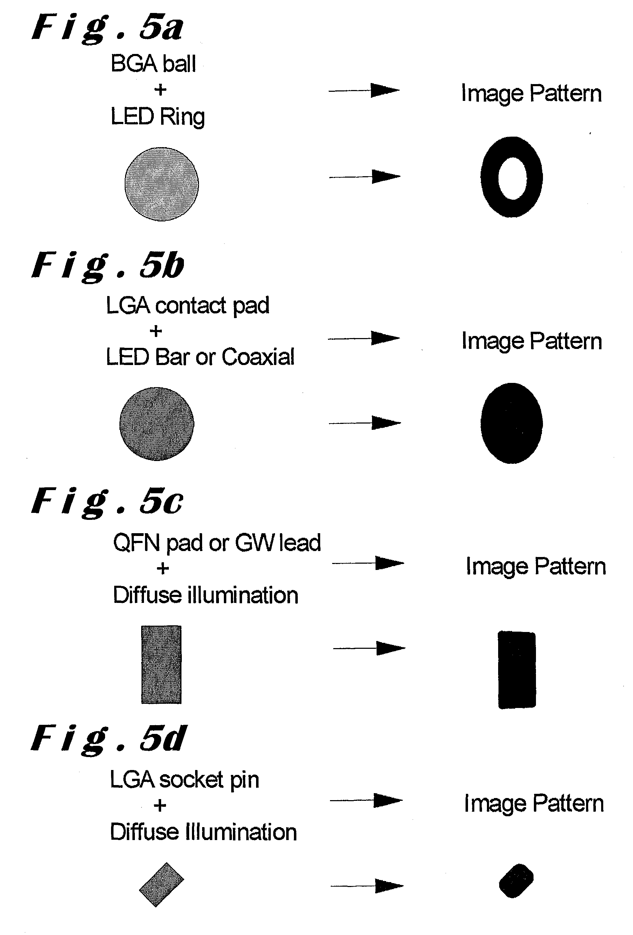

Since each component type has a particular pattern for its contact element, the images recorded by the cameras 1 and 2 will show specific image patterns as illustrated in figures 5 to 9. The image of a single contact point is a specific image pattern correlated to the shape of the contact element and the used illumination source. Figure 5 a) shows the shape of a BGA ball and the image pattern obtained thereof when illuminated with a LED ring. The black area in the image pattern represents bright areas (i.e. high grey values) in the digital images. As can be seen in figure 5 a) and 6, a BGA ball leads to an elliptical image pattern. Figures 5 b) and 7 illustrate an oval plain image pattern obtained by illuminating a LGA contact pad with a LED bar in combination with a coaxial illumination source. Figures 5 c) and 8 illustrate a bright slightly distorted rectangular shaped image pattern, obtained by illuminating a QFN pad or GW lead with a diffuse illumination and figures 5 d) and 9 illustrate an inclined rectangular shaped image pattern obtained by illuminating a LGA socket pin with a diffuse illumination. The characteristic image patterns will be used for determining the co-ordinates of the contact element with respect to the reference frame.

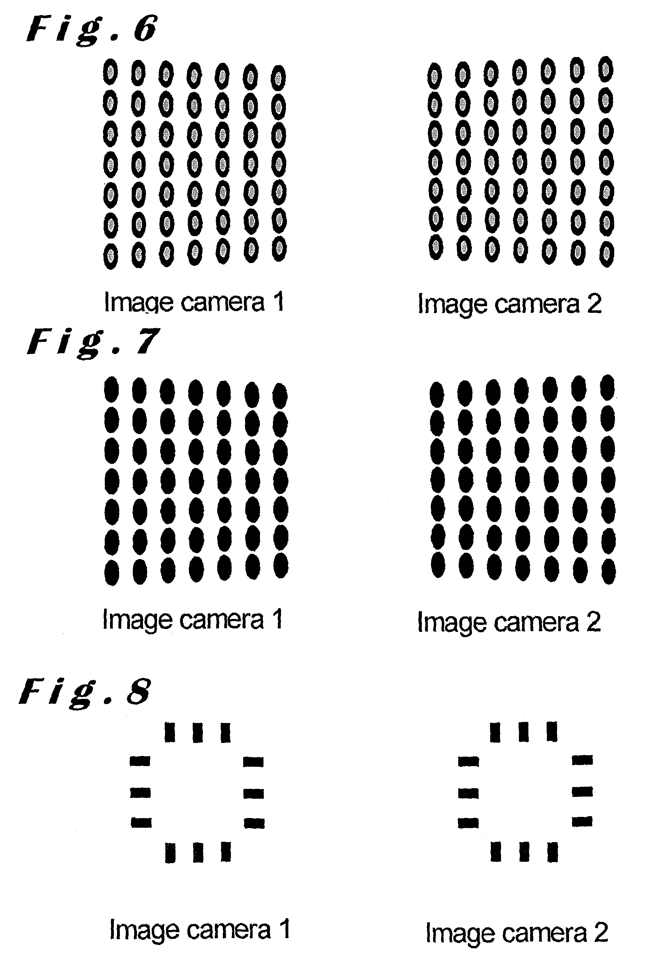

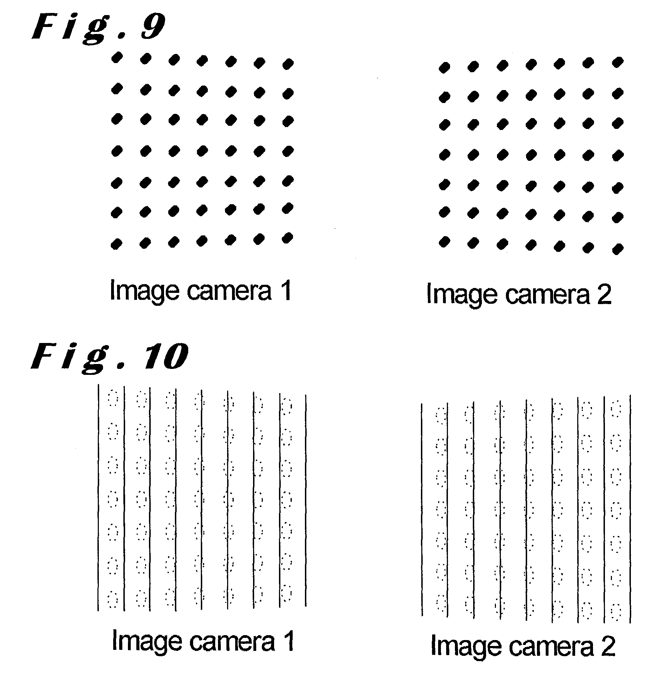

As illustrated in figure 6, the illumination of a BGA component with a LED ring illuminator gives rise to a first image and a second image recorded by the first (1) and second (2) camera. The elliptical pattern is obtained because the first and second camera are tilted over the angle $\alpha 1$ and $\alpha 2$ as described here before. A similar elliptical pattern (figure 7) is obtained for a LGA, which is also due to the tilt angle of the cameras. Figure 10 illustrates the image patterns obtained when using the line projector 11. In the latter figure the illumination lines appear as bright lines in the image whereas the contact elements are less bright.

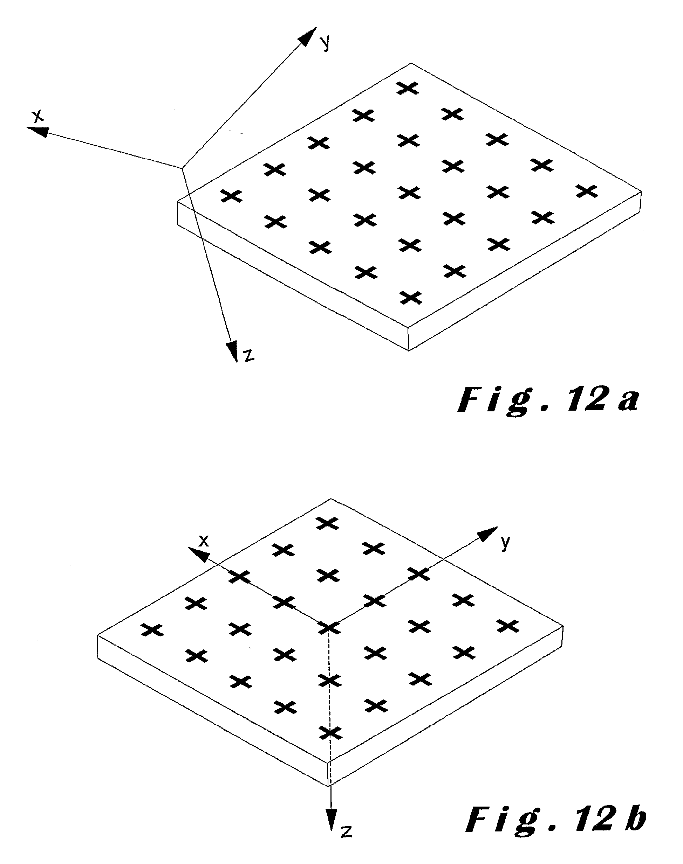

Instead of using a single lens for the lens set-up of each camera, the latter could also be provided with a rotary lens mount as illustrated in figure 11. The rotary lens mount is formed by a rotating disk on which a plurality of lenses are mounted. By means of a motor, the disk can be rotated in order to bring the lens in front of the camera sensor and align it with the optical axis of the camera. The image processor 5 controls the motor. The rotary lens mount can be used as a variable focus lens system i.e. the lenses have a different focal distance, which allows a selection of the lens which provides the best field of view (FOV) for the component, which is inspected.

The lenses can have a different aperture, which allows a selection of the lens, which provides the best light intensity or depth of field (DOF) for the component, which is inspected. A large aperture will allow the lens to collect more light and the DOF will be limited. With a small aperture the lens will collect less light and the DOF will increase.

The rotary lens mount can be equipped with lenses with different focal distances and different apertures to provide an optimal combination of FOV, DOF and light intensity, depending on the components, which need inspection.

When required by the optical and geometrical properties of the components, which need to be inspected, the rotary lens mount can be replaced by a telecentric lens or a standard fixed focus lens. However, in general it is not advantageous to use telecentric lenses since these provide only a fixed FOV and tend to be very large and expensive.

In order to determine the co-ordinates of at least one contact element of the electronic component by using a perspective reconstruction, it is necessary to perform a calibration of the apparatus. For this purpose a calibre as illustrated in figure 12 (a) + b)) is used. The calibre is for example formed by a glass (or any other suitable material) plate with a grid of crosses (or any other 2D geometric shape) at precisely known positions. During the calibration, the calibre is mounted at the place where the component is placed so that the crosses face the camera. The calibre is illuminated by means of one or more of illuminators e.g. the two LED bar illuminators. Two images are recorded i.e. image 1 with camera 1 and image 2 with camera 2. The position of the crosses of the calibre is known in the reference frame. The origin and rotation of the reference frame are arbitrary (fig. 12 a)) but the calculations become less complicated when the origin of the reference frame, this is (x, y, z) = (0, 0, 0), coincides with a cross in the centre of the calibre and the x- and y-axis of the reference frame are aligned with the directions of the grid of crosses. The z-axis is perpendicular to the calibre and together with the x- and y-axis it forms a right-handed cartesian co-ordinate system (fig. 12 b))

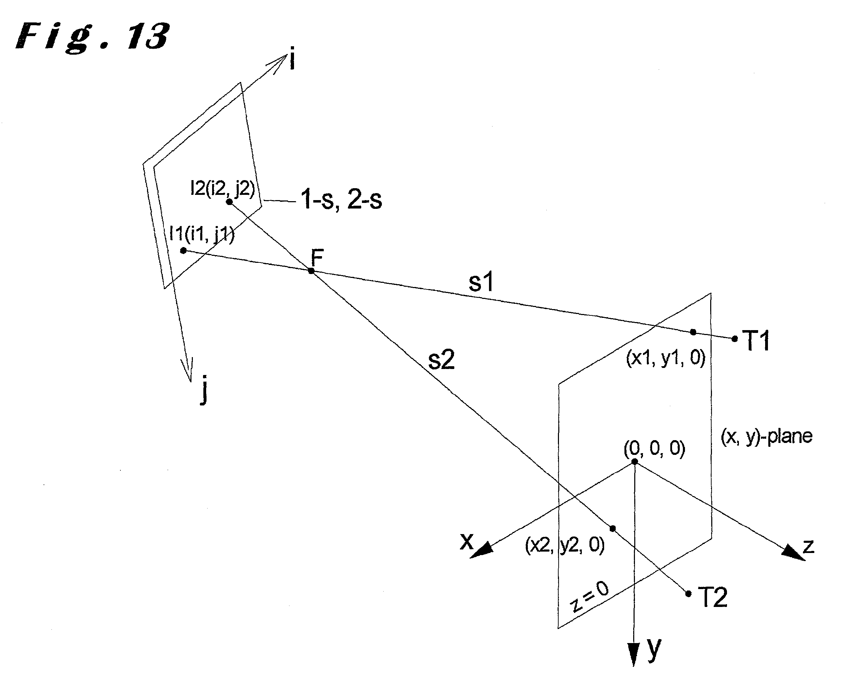

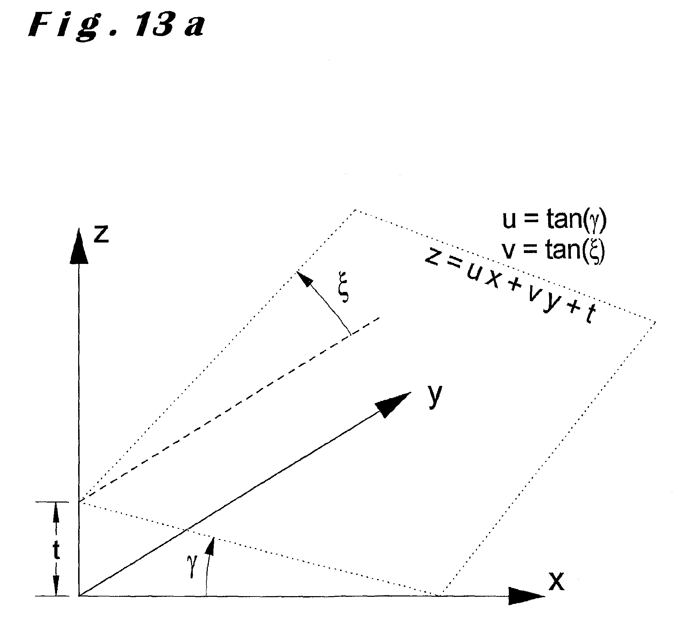

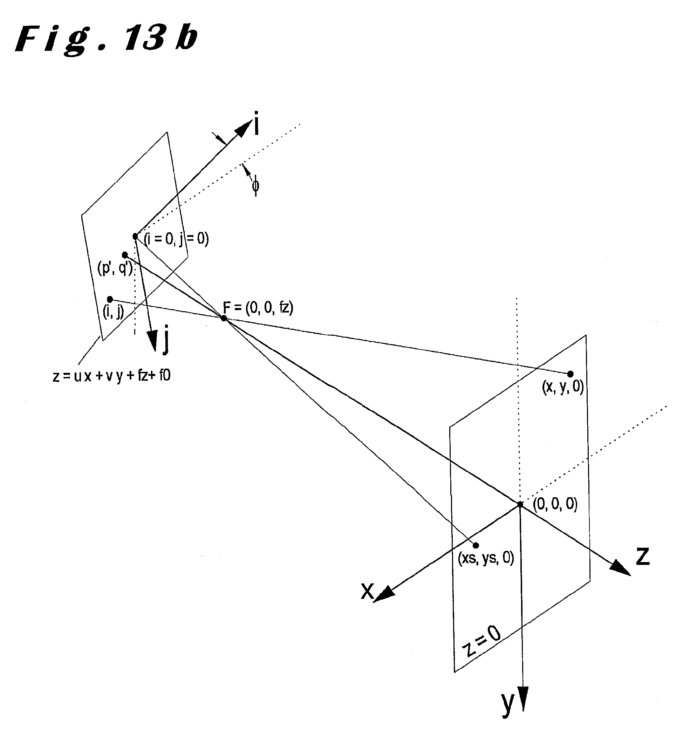

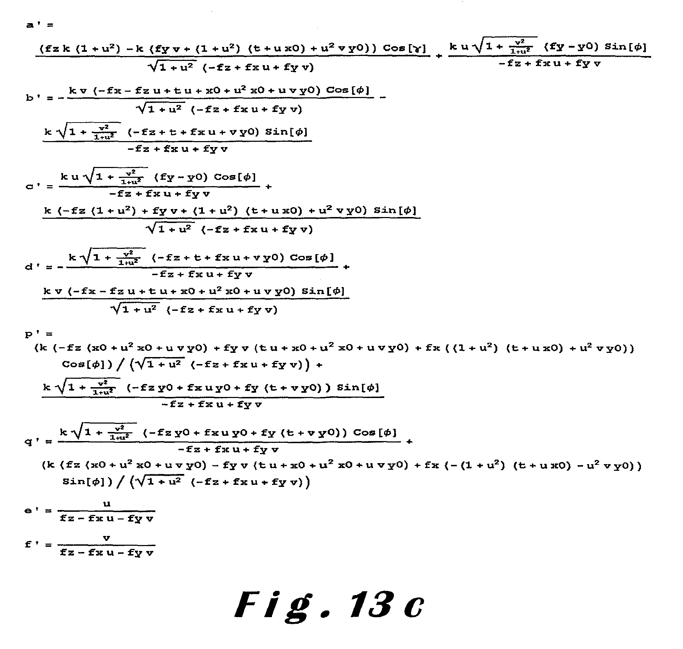

During calibration the geometrical relation is established between the pixel positions in each image and the reference frame. The calibration is used to determine camera-model parameters for each camera. Those camera-model parameters will then be stored in the memory 5-2 of the image processor. As illustrated in figure 13 T1 and T2 are arbitrary points in the 3D reference frame. The lines s1 and s2 connect the points T1 and T2 with the focal point F and crosses the (x, y, z = 0) reference plane in the points (x1, y1, 0) and (x2, y2, 0). The co-ordinates (x1, y1) corresponding to point T1 and (x2, y2) corresponding to point T2 form an image point I1(i1, j1) and I2(i2, j2) in the image field frame (i, j) of the camera and thus in the image recorded by the camera. Thus for each point (xi, yi) of a set of two dimensional points (x, y, z = 0) in the reference frame, an image point (i, j) can be formed in the image by using the focal point of the camera's lens set-up. Once the point I(i, j) is determined in the image, the image co-ordinates of this point are known and a relationship between the co-ordinates (xi, yi) in the reference frame and the co-ordinates (i, j) in the image field frame is established. Taking into consideration the fixed z-position, the co-ordinates (xi, yi) are given by :

$$x = \frac{ai + bj + p}{1 + ei + fj} \qquad \text{(Eq.1)}$$

$$y = \frac{ci + dj + q}{1 + ei + fj} \qquad \text{(Eq.2)}$$

The equations Eq.1 and Eq.2 constitute the camera-model parameters. The parameters a, b, c and d are related to the scaling and the rotation of the camera sensor frame with respect to the reference frame. The parameters p and q give the offset of the origin of the camera sensor frame with respect to the reference frame. The parameters e and f are related to the tilt of the camera sensor plane with respect to the (x, y)-plane of the reference frame. For each camera and each lens there is a different camera model which is calculated during the calibration of the system and which is stored in the memory of the image processor.

The derivation of the equation 1 and 2 will be described in more detail with reference to the figures 13 a to c. As illustrated in figure 13 a, the plane of the camera sensor can be expressed with respect to the reference frame by the equation:

$$z = u\,x + v\,y + t \qquad \text{(Eq.3)}$$

The parameters u and v can be written as

$$u = \tan(\gamma)$$

$$v = \tan(\xi).$$

where $\xi$ and $\gamma$ are the tilt angles of the camera sensor plane as illustrated in figure 13a. The parameter t represents the intercept of the camera sensor plane with the z-axis.

As illustrated in figure 13b, the camera model gives the mathematical relation between points (x, y, 0) on the z = 0 reference plane and their corresponding image points (i, j) on the camera sensor. The image point I(i, j) is obtained by projecting the point (x, y, 0) through the focal point F onto the camera sensor plane (Eq.3). This point I(i, j) can be expressed as well in the (x, y, z) frame as in the orthogonal image frame (i, j), which is linked to pixel array in the camera sensor. This image frame has it's origin (i ,j) = (0,0) in the camera sensor plane. This origin corresponds to the point (x0, y0, u x0 + v y0 + t) in the reference frame.

Assume now that the focal point F lies on the z-axis of the reference frame so that F = (0, 0, fz). In order to describe a projected image point in the camera sensor plane in the (i, j) image frame of the sensor, one has to apply the following transformations to the image points obtained by the image of an (x, y, z) point in the reference frame:

    1. translation to the origin of the (i, j) frame;
    2. orthogonal rotation transformation over the tilt angles $\xi$ and y;
    3. scaling with scale factor k. The scale factors representing the conversion between the scale used in the x, y, z reference frame and the pixel scale used in the image;
    4. a rotation over an angle $\phi$;
    to obtain the coordinates (i, j) of this image point in the image frame (i, j) linked to the camera sensor.

Knowing this and with t = f 0+ fz (see Eq.3) where f0 is the focal length of the lens, one can derive that:

$$i = \frac{a'x + b'y + p'}{1 + e'x + f'y} \qquad \text{(Eq.4)}$$

and

$$j = \frac{c'x + d'y + q'}{1 + e'x + f'y} \qquad \text{(Eq.5)}$$

with

$$a' = \frac{k\left(f0 + u\left(f0\,u + x0 + u^2 x0 + u v\,y0\right)\right)\cos[\phi]}{fz\sqrt{1+u^2}} + \frac{k u \sqrt{1 + \frac{v^2}{1+u^2}}\; y0\,\sin[\phi]}{fz}$$

$$b' = \frac{kv\,(f0\,u + x0 + u^2\,x0 + u\,v\,y0)\,\mathrm{Cos}[\phi]}{fz\,\sqrt{1+u^2}} + \frac{k\,\sqrt{1+\frac{v^2}{1+u^2}}\,(f0 + v\,y0)\,\mathrm{Sin}[\phi]}{fz}$$

$$p' = \frac{k\,(x0 + u^2\,x0 + u\,v\,y0)\,\mathrm{Cos}[\phi]}{\sqrt{1+u^2}} + k\,\sqrt{1+\frac{v^2}{1+u^2}}\,y0\,\mathrm{Sin}[\phi]$$

$$c' = \frac{ku\,\sqrt{1+\frac{v^2}{1+u^2}}\,y0\,\mathrm{Cos}[\phi]}{fz} - \frac{k\,(f0 + u\,(f0\,u + x0 + u^2\,x0 + u\,v\,y0))\,\mathrm{Sin}[\phi]}{fz\,\sqrt{1+u^2}}$$

$$d' = \frac{k\,\sqrt{1+\frac{v^2}{1+u^2}}\,(f0 + v\,y0)\,\mathrm{Cos}[\phi]}{fz} - \frac{kv\,(f0\,u + x0 + u^2\,x0 + u\,v\,y0)\,\mathrm{Sin}[\phi]}{fz\,\sqrt{1+u^2}}$$

$$q' = k\,\sqrt{1+\frac{v^2}{1+u^2}}\,y0\,\mathrm{Cos}[\phi] - \frac{k\,(x0 + u^2\,x0 + u\,v\,y0)\,\mathrm{Sin}[\phi]}{\sqrt{1+u^2}}$$

$$e' = \frac{u}{fz}$$

and

$$f' = \frac{v}{fz}$$

By inverting the equations Eq.4 and Eq.5, Eq.1 and Eq.2 are obtained with:

$$a = \frac{d' - f'q'}{a'd' - b'c'}$$

$$b = \frac{-b' - f'p'}{a'd' - b'c'}$$

$$c = \frac{-c' + e'q'}{a'd' - b'c'}$$

$$d = \frac{a' - e'p'}{a'd' - b'c'}$$

$$p = \frac{b'q' - d'p'}{a'd' - b'c'}$$

$$q = \frac{-a'q' + c'p'}{a'd' - b'c'}$$

$$e = \frac{c'f' - e'd'}{a'd' - b'c'}$$

and

$$f = \frac{-a'f' + e'b'}{a'd' - b'c'}$$

For the more general case where the focal point does not lie on the z-axis, but $F = (f_x, f_y, f_z)$ the expressions for a', b', c', d', p', q', e' and f' become more complex as shown in Fig.13c.

From the position of the image points of the crosses, the camera model, the known focal length of the lens and the size of the pixels of the camera sensor, the focal point position F is calculated with respect to the reference frame.

In case a calibre is constructed with crosses, which do not all lie in the same plane, the focal point can be calculated without the prior knowledge of the focal length of the lens and the size of the pixels. If necessary for the performance of the system, the equations Eq.1 and Eq.2 can be extended to allow for the geometrical distortion of the lens.

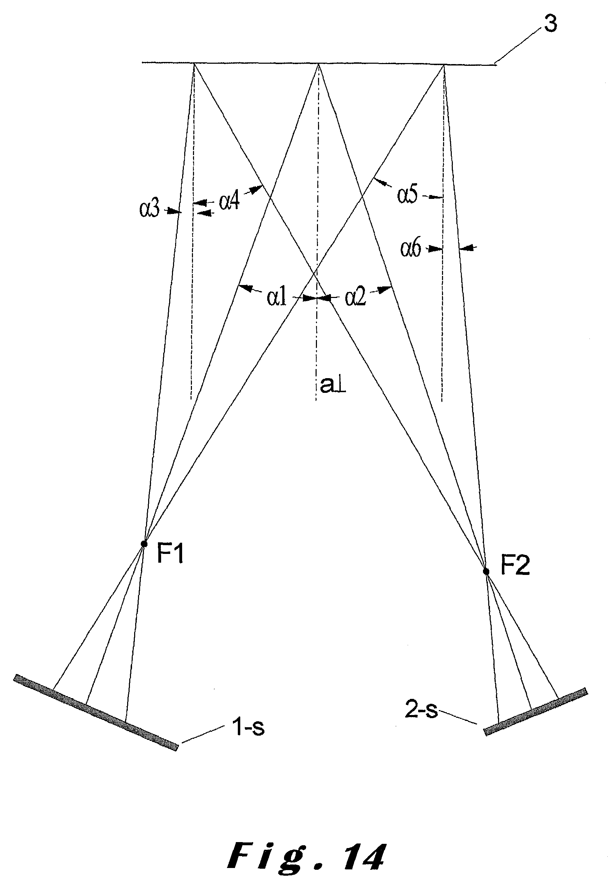

The perspective reconstruction for calculating the three dimensional positions of the contact elements is based on the calculation of the intersecting point of two lines. The angles $\alpha1$ and $\alpha2$ of the camera are not used in this method. This distinguishes the present method from a triangulation method where the angles of the cameras are the basic parameters. In the perspective reconstruction the angles of the cameras $\alpha1$ and $\alpha2$ are only implicitly present in the camera-model parameters (Eq.1 and Eq.2). For the perspective reconstruction no camera angles are required. Only the knowledge of the focal points and the camera-model parameters is needed. Figure 14 illustrates how light rays emanating from an object and passing through the focal points F1 or F2 to strike the respective camera sensors, have different angles with respect to the perpendicular axis $a\perp$. Indeed angles $\alpha3$, $\alpha4$ and $\alpha5$, $\alpha6$ are substantially different from each other although they originate from a same point on the object, whereas the angles $\alpha1$ and $\alpha2$ are equal to each other. As such, it is impossible to reconstruct the three-dimensional position of the object by only using the angles $\alpha1$ and $\alpha2$.

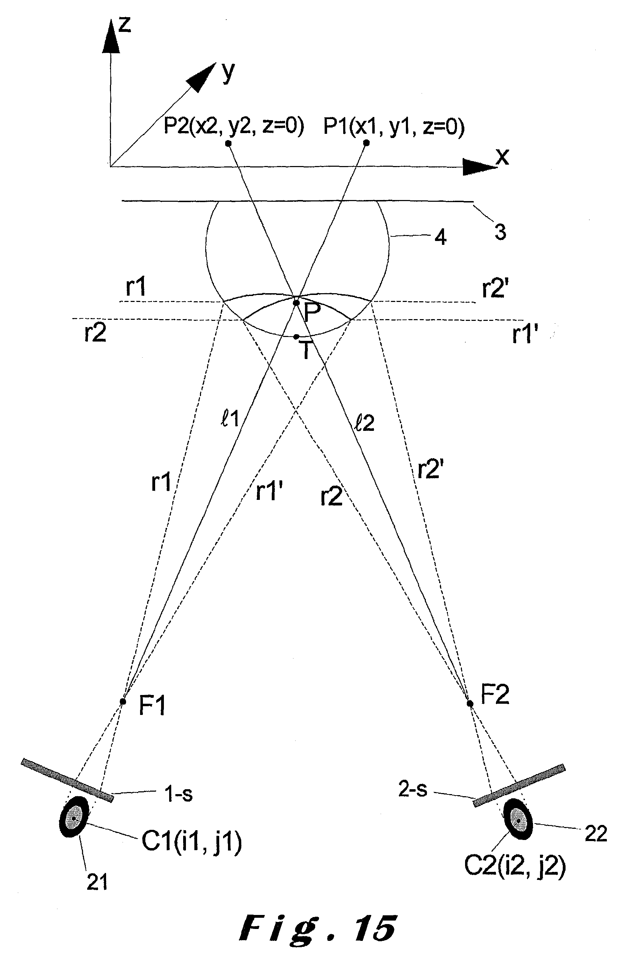

Figure 15 illustrates how, using the perspective reconstruction, the co-ordinates of a point P on the contact element can be determined. For the sake of clarity, a BGA ball will be used. It will however be clear that the described method is also applicable to all other mentioned types of contact elements. The ball 4 of the electronic component 3 is illuminated by the light rays r1, r2, r1' and r2' emanating from the LED ring illuminator 7. Those light rays are incident on the surface of the ball and reflected towards the first camera 1 (rays r1 and r1') and the second camera 2 (rays r2 and r2'). The reflected rays cross the respective focal points F1 and F2 and form the characteristic elliptical image pattern 21 and 22.

In these image patterns a predetermined location, C1(i1, j1) for image pattern 21 and C2(i2, j2) for image pattern 22 is attributed. Preferably those locations C1 and C2 are located substantially at the centre of the pattern. However, other positions than the centre are also possible such as one of the focal points of the ellipse could also be used. Alternatively a gravity point in the image could be determined and used for this purpose. The predetermined location could also be determined by using a convolution technique, i.e. by applying a sample over the recorded image. Once the locations C1 and C2 are attributed, the image co-ordinates (i1, j1) and (i2, j2) in the image frame can be determined. The camera-model parameters determined during calibration (Eq.1 and Eq.2) are now used in order to determine the co-ordinates of the first point P1(x1, y1, z = 0) and a second P2(x2, y2, z = 0) in the reference frame. Indeed, using the co-ordinates C1(i1, j1) respectively C2(i2, j2) the equation Eq.1 and Eq.2 will provide the co-ordinates of P1 and P2 in the reference frame (x, y, z ). The points P1 and P2 in the reference frame are those which form the image point C1 and C2 in the respective image pattern.

The camera-model parameters thus provide the co-ordinates of points P1 and P2 in the z = 0 plane. For obtaining a z co-ordinate, some additional processing is required. For this purpose a first line segment L1, connecting the first point $P1(x1, y1, z = 0)$ with the focal point F1, is determined as well as a second line segment L2 connecting the second point $P2(x2, y2, z = 0)$ with the focal point F2. As both line segments cross each other, their crossing point P indicates a z-position of the ball 4. As the co-ordinates of P1, P2, F1 and F2 are known with respect to the reference frame x, y, z, the crossing point P can be easily determined from the equations representing L1 and L2. In such a manner, the z co-ordinate of the crossing point P is determined and thus the x, y, z position of P. It should be noted that the point P is not at the top of the ball, but the height difference (measured along the z-axis) is the same for all the balls.

A similar perspective reconstruction can be performed for LGA, GW or QFN components of LGA sockets. In each case a predetermined location C1 and C2 has to be attributed to the respective image pattern. So, for example, for the LGA pattern also the centre can be used, whereas for the QFN and LGA socket pin pattern, a cross could be determined starting from the image corners and the crossing point could be used as the points C1 and C2.

For measuring the height of the ball of a BGA with respect to the substrate surface, the ball top needs to be measured. This is done in a first step as described here before with respect to figure 15. In a second step the 3D position of the substrate surface needs to be measured. Therefore a sufficient number of 3D points needs to be located on the substrate surface. From these points, the 3D position of the substrate surface can be reconstructed. In a third and final step, the ball height is calculated as the shortest distance between the ball top and the substrate surface.

To measure the 3D position of the substrate surface, a number of bright lines are projected on the substrate surface by using the line projector 11 (figure 2). With each camera of the apparatus an image of these lines is recorded, which results in images as illustrated in figure 10. The lines need to be located in the images in order to thereafter perform a perspective reconstruction as described here before. To do this correctly, it is necessary to link a certain line in the first image recorded by the first camera with the corresponding line in the second image recorded by the second camera. The perspective reconstruction for line number n in first image should be done with line number n in second image, and not with any other line, as this would lead to a wrong result.

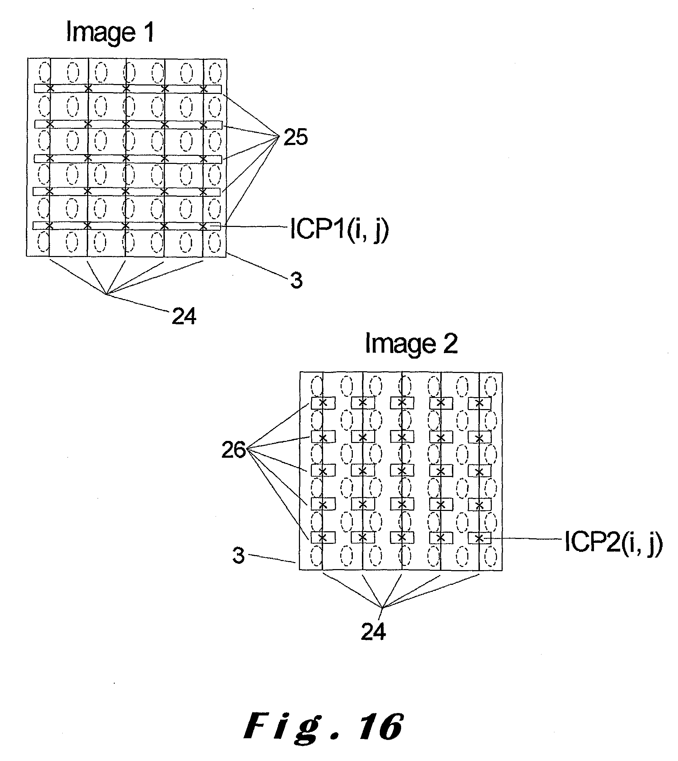

When use is made of the line projector, the position of the projected lines needs to be located in the images. Figure 16 illustrates how this is realised for an LGA or BGA component. As shown in figure 2 the line projector 11 projects an array 23 of lines on the surface of the electronic component. Preferably, the line array 23 is formed by parallel lines, which provides an easier calculation. The line projector is preferably oriented in such a manner as to project the lines on these parts of the surface where no balls are present, thereby avoiding that lines are reflected by the balls. To this purpose the information collected in the first step is used. This array of lines is recorded by the first and second camera thus leading to a further array of lines 24 within the first and second image. Since the array of lines is projected on the substrate on which the contact elements are present, the recorded image will show the further array of lines as well as the contact elements (represented by dotted lines in figure 16).

The image processor is provided for applying within the recorded first image a first set of first windows 25. The latter being applied between a predetermined number of successive image patterns. As can be seen in image 1 of figure 16, the first windows 25 are formed by horizontal beams extending between successive rows of ellipses, being the images patterns of the balls of the BGA or LGA. The further array of lines 24 each time crosses the first windows 25, thereby forming a set of first window crossing points. These first window crossing points are indicated by crosses in image 1 of figure 16. The image processor is provided for determining within each of the first windows 25 of the first image, the co-ordinates of these first window crossing points. In order to determine these co-ordinates, the image processor recognises the first window crossing point in the recorded first image and determines the co-ordinates ICP1 (i, j) in the image frame.

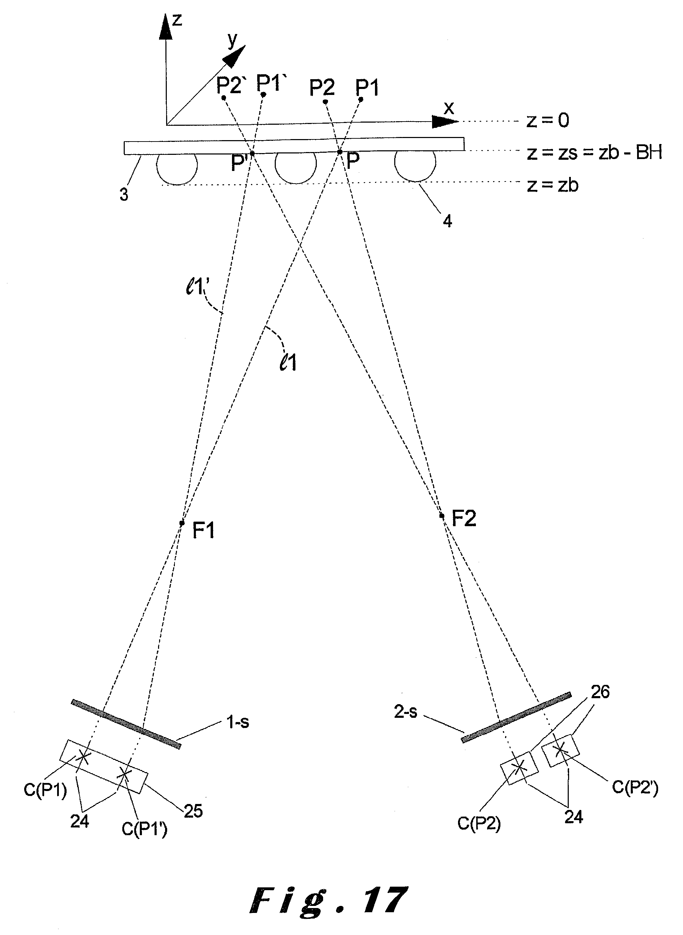

Once the co-ordinates ICP1 (i, j) of at least one first window crossing point for at least one line of the further array are determined, the co-ordinates of these positions are mapped into the second image in order to obtain a mapped first crossing point within the second image. This operation is necessary in order to recognise corresponding lines in both images. Indeed, since the projected line array issues from a same line projector, leading to a single line array on the substrate, there has to be correspondence between the further line arrays in both images. As illustrated in figure 17, there has to be a correspondence between C(P1) and C(P2) on the one hand and C(P'1) and C(P'2) on the other hand, because C(P1) in image 1 and C(P2) in image 2, respectively C(P'1) in image 1 and C(P'2) in image 2 correspond to the same point P respectively P' and thus to the same line on the substrate.

The mapping of the first window crossing points C(P1) and C(P1') in the second image will now be described in more details. Using the camera- model parameters (Eqs.1-2) for the first window crossing points C(P1) and C(P1'), the points P1 and P1' in the z = 0 reference plane, corresponding to the lines l1 and l1', are determined. Thereafter the lines P1-F1 and P1'-F1, connecting the points P1 and P1' with the focal point F1 of the lens set-up of the first camera, are constructed. From the 3D measurement of the balls, the average z-position of the ball tops zb can be determined. Knowing zb and an estimate BH of the ball height, an estimate is made of zs, the expected z-position of the substrate.

The lines P1-F1 and P1'-F1 intersect the z = zs plane in the points Pe and Pe' (these are not shown in figure 17 for clarity sake) in the vicinity of the points P and P'.

Knowing the focal point F2 of the lens set-up of the second camera, the lines F2-Pe and F2-Pe' are determined. The latter lines cross the z = 0 plane in the points Pe2 and Pe2' (also not shown). Using the inverted camera model parameters (Eq.4 and Eq.5) for second camera, the image points of Pe2 and Pe2' in the second image are determined. These image points form the mapped first window crossing points of C(P1) and C(P1') in the second image. Due to the fact that the latter image points are obtained by mapping the first window crossing points, they are located in the vicinity of the location on which in the second images the second window crossing points ICP2(i,j) will be located.

On each of these mapped first window crossing points a second window belonging to a second set of second windows 26 are placed. Those second windows will contain the images in the second image of the projector lines points P and P'. The points ICP2(i,j) within these second windows where the projector lines 24 of the further array cross these second windows are now determined thereby providing the points C(P2) and C(P2') in the second image. On the pairs of image points C(P1) and C(P1') and C(P2) and C(P2') the perspective reconstruction is applied in a analogous manner as it is applied to the pair of image points (C1, C2) in Fig.15. This results in two 3D points on the substrate surface on the projector lines P and P' respectively. With a sufficient number (10 for a CSP to 100 or more for a BGA) of 3D positions on the substrate to be measured, the exact position and deformation (warpage) of the substrate can be determined.

The apparatus according to the present invention offers advantages with respect to other ones having a camera extending along the perpendicular axis $a_\perp$.

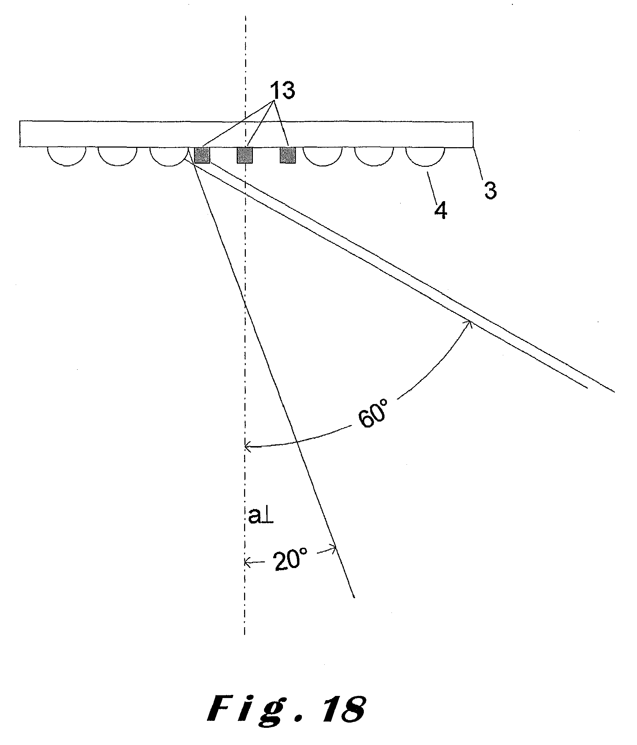

Since the angle with the perpendicular axis $a_\perp$ is smaller, it is possible to measure very large components. With a large angle it is impossible to illuminate a large component in a sufficient homogeneous way. It is also possible to measure components with obstacles in the centre (e.g. resistors, capacitors). This is illustrated in fig. 18 (and fig. 4), where the clear view of the ball for the light path under 60° with respect to. the perpendicular axis is blocked by the obstacle, while this is not the case for the light path under 20°.

The camera set-up is symmetric, which results in more accurate measurements, which are less sensitive to the position and rotation of the component. The thus obtained symmetric images result in more straightforward software algorithms and structures.

The perspective reconstruction allows the use of fixed focus lenses. In contrast, a triangulation reconstruction method requires telecentric lenses, which provide only a fixed FOV and tend to be very large and expensive as compared to fixed focus lenses. The described apparatus achieves a high degree of measurement accuracy which, with a triangulation reconstruction method, would be achieved when telecentric lenses are used. Therefore the described system is less expensive, more flexible and can be made more compact. The apparatus with the line projector allows for the measurement of the height of the contact pins with respect to the substrate.

## Claims

1. A three dimensional measuring apparatus, provided for measuring a position of at least one contact element, applied on a surface of an electronic component, said apparatus comprising an illumination source, provided for illuminating said contact element, said apparatus further comprising a first and a second camera, said first and second camera being each provided with a lens set-up, having a focal point and optical axis, said first and second camera being disposed at opposite sides with respect to a perpendicular axis on said surface of said component, in such a manner that their optical axis form each time an angle ≠ 0° with respect to said perpendicular axis, said first and second camera each having an image field, provided for forming thereon a first, respectively a second image pattern of at least one of said contact elements, said first and second camera being connected with an image processor, provided for processing said image patterns formed in said image field by applying calculations on said first and second image patterns in order to determine, within a 3D reference frame, said position of said at least one contact element, **characterised in that** said image processor is provided for applying a perspective reconstruction on measurements, performed on said first and second image pattern, in order to apply said calculation with reference to a predetermined calibre.

2. A three dimensional measuring apparatus as claimed in claim 1, **characterised in that** said image processor comprises a memory, provided for storing camera-model parameters for each camera, obtained by placing said calibre, having a set of two dimensional (x,y) points, in said reference frame and forming for each point (xi,yj) of said set an image point (i,j) thereof within each respective image field, by tracing an optical line connecting said focal point and said point (xi,yj), and by determining within each respective image field, image co-ordinates (i,j) of said image points, said camera-model parameters being formed by a set of equations converting each point (xi,yj) of said set in said image co-ordinates (i,j), said image processor being further provided for realising said perspective reconstruction by attributing a predetermined location C1(i,j), respectively C2(i,j) within said respective image patterns and for determining, using said camera-model parameters, a first point P1 (x,y) and a second point P2(x,y) within said reference frame, said image processor being further provided for determining a first and a second line segment, connecting said first point P1 (x,y) and second point P2(x,y) respectively with the focal point of the lens set-up of said first, respectively said second camera and for determining co-ordinates (x,y,z) of a point P on said contact element situated on a cross-point of said first and second line segment.

3. A three dimensional measuring apparatus as claimed in claim 1 or 2, **characterised in that** said first and second camera are disposed symmetrically with respect to said perpendicular axis.

4. A three dimensional measuring apparatus as claimed in anyone of the claims 1 to 3, **characterised in that** the optical axis of said first and second camera form among them an angle situated between 20° and 120°.

5. A three dimensional measuring apparatus as claimed in anyone of the claims 1 to 4, **characterised in that** said predetermined location C1(i,j), respectively C2(i,j) are located at substantially a centre of said pattern.

6. A three dimensional measuring apparatus as claimed in anyone of the claims 1 to 5, **characterised in that** said set of equations is formed by :

$$x = \frac{ai+bj+p}{1+ei+fj}$$

$$y = \frac{ci+dj+q}{1+ei+fj}$$

wherein the parameters a, b, c and d are related to a scaling and a rotation of said camera with respect to said reference frame, the parameters p and q giving an offset of an origin of said camera with respect to said reference frame and the parameters e and f being related to a camera tilt angle with respect to said reference plane.

7. A three dimensional measuring apparatus as claimed in anyone of the claims 1 to 6, **characterised in that** said illumination source comprises a LED ring illuminator.

8. A three dimensional measuring apparatus as claimed in anyone of the claims 1 to 6, **characterised in that** said illumination source comprises a LED bar illuminator.

9. A three dimensional measuring apparatus as claimed in anyone of the claims 1 to 6, **characterised in that** said illumination source comprises a diffuse illuminator.

10. A three dimensional measuring apparatus as claimed in anyone of the claims 1 to 6, **characterised in that** said illumination source comprises a coaxial illuminator.

11. A three dimensional measuring apparatus as claimed in claims 7, 8, 9 and 10, **characterised in that** said apparatus comprises selection means for selectively activating one of said illuminators.

12. A three dimensional measuring apparatus as claimed in claim 11, **characterised in that** said apparatus comprises an input, provided for inputting an identifier, identifying a type of contact element to be inspected, said input being connected to said selection means, which are further provided for selecting one of said illuminators under control of said identifier.

13. A three dimensional measuring apparatus as claimed in anyone of the claims 1 to 12, **characterised in that** said apparatus comprises a third camera having an optical axis applied coincident with said perpendicular axis, said third camera being provided for recording an image of said surface for inspection purpose.

14. A three dimensional measuring apparatus as claimed in claim 13, **characterised in that** said third camera is further provided for determining a peripheral of said surface.

**15.** A three dimensional measuring apparatus as claimed in anyone of the claims 1 to 14, **characterised in that** said lens set-up comprises a further set of lenses mounted on a rotary lens mount, each lens of said further set having a predetermined focal point.

**16.** A three dimensional measuring apparatus as claimed in anyone of the claims 1 to 15, **characterised in that** said illumination source is formed by a line projector provided for projecting an array of lines on said surface in order to form a further array of lines within said image fields, said image processor being provided for applying between a predetermined number of successive image patterns a first set of first windows within said first image, said image processor being also provided for determining within each of said first windows a first window crossing point indicating a crossing of said first window by one of said lines of said further array and for determining within said first windows co-ordinates of said first window crossing point, said image processor being further provided for mapping said co-ordinates corresponding to said first window crossing point into said second image in order to obtain a mapped first window crossing point and applying within said second image a second set of windows around said mapped first window crossing point, said image processor being also provided for determining within said second window a further crossing point indicating a crossing of said second window by one of said lines of said further array and for determining co-ordinates within said surface on the basis of said first and second window crossing points.

**17.** A three dimensional measuring apparatus as claimed in claim 16, **characterised in that** said image processor is provided for executing said mapping by using said camera-model parameters.

**18.** A three dimensional measuring apparatus as claimed in claim 17, **characterised in that** said image processor is provided for executing said mapping by determining within said reference frame cross point co-ordinates corresponding to said first window crossing point thereby using said camera-model parameters, said image processor being further provided for determining based on said cross point co-ordinates line-co-ordinates on said illumination lines and for determining, using inverted camera-model parameters, said mapped first window crossing points on the basis of said line-co-ordinates.

**19.** A three dimensional measuring apparatus as claimed in claim 16, 17 or 18, **characterised in that** said line projector is provided for forming said array of lines by forming substantially parallel lines.

*Fig.1*

*Fig. 2*

**Fig.3**

$$Hmax = (S - \delta) \tan(90° - \alpha)$$

# Fig. 4

# Fig. 11

# *Fig. 5a*

BGA ball
+
LED Ring

→ Image Pattern

# *Fig. 5b*

LGA contact pad
+
LED Bar or Coaxial

→ Image Pattern

# *Fig. 5c*

QFN pad or GW lead
+
Diffuse illumination

→ Image Pattern

# *Fig. 5d*

LGA socket pin
+
Diffuse Illumination

→ Image Pattern

# Fig. 6

Image camera 1

Image camera 2

# Fig. 7

Image camera 1

Image camera 2

# Fig. 8

Image camera 1

Image camera 2

# Fig. 9

Image camera 1       Image camera 2

# Fig. 10

Image camera 1       Image camera 2

*F i g . 12 a*

*F i g . 12 b*

*Fig. 13*

# *Fig. 13 a*

$$u = \tan(\gamma)$$
$$v = \tan(\xi)$$
$$z = ux + vy + t$$

# *Fig. 13 b*

$z = u\,x + v\,y + fz + f0$

$a' =$

$$\frac{(fz\,k\,(1+u^2) - k\,(fy\,v + (1+u^2)\,(t+u\,x0) + u^2\,v\,y0))\,Cos[\gamma]}{\sqrt{1+u^2}\,(-fz+fx\,u+fy\,v)} + \frac{k\,u\,\sqrt{1+\frac{v^2}{1+u^2}}\,(fy-y0)\,Sin[\phi]}{-fz+fx\,u+fy\,v}$$

$b' = -\dfrac{k\,v\,(-fx-fz\,u+t\,u+x0+u^2\,x0+u\,v\,y0)\,Cos[\phi]}{\sqrt{1+u^2}\,(-fz+fx\,u+fy\,v)} -$

$$\frac{k\,\sqrt{1+\frac{v^2}{1+u^2}}\,(-fz+t+fx\,u+v\,y0)\,Sin[\phi]}{-fz+fx\,u+fy\,v}$$

$c' = \dfrac{k\,u\,\sqrt{1+\frac{v^2}{1+u^2}}\,(fy-y0)\,Cos[\phi]}{-fz+fx\,u+fy\,v} +$

$$\frac{k\,(-fz\,(1+u^2) + fy\,v + (1+u^2)\,(t+u\,x0) + u^2\,v\,y0)\,Sin[\phi]}{\sqrt{1+u^2}\,(-fz+fx\,u+fy\,v)}$$

$d' = -\dfrac{k\,\sqrt{1+\frac{v^2}{1+u^2}}\,(-fz+t+fx\,u+v\,y0)\,Cos[\phi]}{-fz+fx\,u+fy\,v} +$

$$\frac{k\,v\,(-fx-fz\,u+t\,u+x0+u^2\,x0+u\,v\,y0)\,Sin[\phi]}{\sqrt{1+u^2}\,(-fz+fx\,u+fy\,v)}$$

$p' =$
$$(k\,(-fz\,(x0+u^2\,x0+u\,v\,y0) + fy\,v\,(t\,u+x0+u^2\,x0+u\,v\,y0) + fx\,((1+u^2)\,(t+u\,x0) + u^2\,v\,y0))$$
$$Cos[\phi]) \Big/ \left(\sqrt{1+u^2}\,(-fz+fx\,u+fy\,v)\right) +$$

$$\frac{k\,\sqrt{1+\frac{v^2}{1+u^2}}\,(-fz\,y0+fx\,u\,y0+fy\,(t+v\,y0))\,Sin[\phi]}{-fz+fx\,u+fy\,v}$$

$q' = \dfrac{k\,\sqrt{1+\frac{v^2}{1+u^2}}\,(-fz\,y0+fx\,u\,y0+fy\,(t+v\,y0))\,Cos[\phi]}{-fz+fx\,u+fy\,v} +$

$$(k\,(fz\,(x0+u^2\,x0+u\,v\,y0) - fy\,v\,(t\,u+x0+u^2\,x0+u\,v\,y0) + fx\,(-(1+u^2)\,(t+u\,x0) - u^2\,v\,y0))$$
$$Sin[\phi]) \Big/ \left(\sqrt{1+u^2}\,(-fz+fx\,u+fy\,v)\right))$$

$$e' = \frac{u}{fz-fx\,u-fy\,v}$$

$$f' = \frac{v}{fz-fx\,u-fy\,v}$$

$$\textit{Fig. 13c}$$

25

*Fig. 14*

*Fig. 15*

Image 1

ICP1(i, j)

25

24

3

Image 2

26

3

ICP2(i, j)

24

*Fig . 16*

*Fig. 17*

**Fig. 18**

**European Patent Office**

**EUROPEAN SEARCH REPORT**

Application Number

EP 04 07 7125

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HELM J D ET AL: "IMPROVED THREE-DIMENSIONAL IMAGE CORRELATION FOR SURFACE DISPLACEMENT MEASUREMENT" OPTICAL ENGINEERING, SOC. OF PHOTO-OPTICAL INSTRUMENTATION ENGINEERS. BELLINGHAM, US, vol. 35, no. 7, July 1996 (1996-07), pages 1911-1920, XP000631012 ISSN: 0091-3286 * abstract * * page 1911, left-hand column - page 1913, right-hand column * * page 1914, right-hand column - page 1915, left-hand column * | 1-18 | G06T7/00 |
| X | US 5 347 363 A (YAMANAKA ET AL) 13 September 1994 (1994-09-13) * abstract * | 1-6 | |
| D,Y | US 6 064 756 A (BEATY ET AL) 16 May 2000 (2000-05-16) * figure 14 * * column 17, line 52 - column 18, line 23 * | 1-6 | TECHNICAL FIELDS SEARCHED (Int.Cl.7) |
| Y | FAUGERAS OLIVIER: "THREE-DIMENSIONAL COMPUTER VISION, A GEOMETRIC VIEWPOINT" 2001, MIT PRESS , CAMBRIDGE, MASSACHUSSETS , XP002316574 Chapter 6: Stereo Vision pages 165-243 * page 166, line 10 - line 16 * | 1-6 | G06T G01B |

-/--

The present search report has been drawn up for all claims

| Place of search | Date of completion of the search | Examiner |
|---|---|---|
| The Hague | 14 February 2005 | Almeida Garcia, B |

**European Patent Office**

**EUROPEAN SEARCH REPORT**

Application Number

EP 04 07 7125

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | FAUGERAS OLIVIER: "THREE-DIMENSIONAL COMPUTER VISION, A GEOMETRIC VIEWPOINT" 2001, MIT PRESS , CAMBRIDGE, MASSACHUSSETS. , XP002316575 Chapter 3: Modeling and calibrating cameras pages 33-68 * page 37, paragraph 1 - page 41, paragraph 3 * | 1-6 | |
| A | US 6 611 344 B1 (CHUANG PING DERG ET AL) 26 August 2003 (2003-08-26) * abstract * * figure 34 * * column 2, line 35 - column 2, line 60 * * column 6, line 4 - column 6, line 26 * * column 7, line 1 - column 7, line 45 * * column 16, line 50 - column 17, line 33 * | 16-19 | |

TECHNICAL FIELDS SEARCHED (Int.Cl.7)

The present search report has been drawn up for all claims

| Place of search | Date of completion of the search | Examiner |
|---|---|---|
| The Hague | 14 February 2005 | Almeida Garcia, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 04 07 7125

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2005

| Patent document cited in search report | | Publication date | Patent family member(s) | | Publication date |
|---|---|---|---|---|---|
| US 5347363 | A | 13-09-1994 | JP | 2714277 B2 | 16-02-1998 |
| | | | JP | 5026640 A | 02-02-1993 |
| | | | KR | 9613683 B1 | 10-10-1996 |
| US 6064756 | A | 16-05-2000 | US | 6072898 A | 06-06-2000 |
| | | | CN | 1287643 T | 14-03-2001 |
| | | | EP | 1046127 A1 | 25-10-2000 |
| | | | JP | 2002509259 T | 26-03-2002 |
| | | | WO | 9936881 A1 | 22-07-1999 |
| | | | US | 6064757 A | 16-05-2000 |
| | | | US | 2002037098 A1 | 28-03-2002 |
| | | | US | 2002034324 A1 | 21-03-2002 |
| US 6611344 | B1 | 26-08-2003 | SG | 73563 A1 | 20-06-2000 |
| | | | AU | 2019400 A | 19-06-2000 |
| | | | GB | 2361534 A | 24-10-2001 |
| | | | CN | 1334913 T | 06-02-2002 |
| | | | WO | 0033026 A1 | 08-06-2000 |

EPO FORM P0459

For more details about this annex : see Official Journal of the European Patent Office, No. 12/82